# EUROPÄISCHE PATENTSCHRIFT

(11) **EP 1 565 648 B1**
(45) Veröffentlichungstag und Bekanntmachung des Hinweises auf die Patenterteilung: **14.06.2006**
(21) Anmeldenummer: 03775183.1
(22) Anmeldetag: 15.10.2003
(51) Int. Cl.: F02B 67/06, F01P 5/12, F16H 13/02, F16H 13/14

(54) **RIEMENTRIEB FÜR HILFSAGGREGATE EINER BRENNKRAFTMASCHINE**
BELT DRIVE FOR AUXILIARY UNITS IN AN INTERNAL COMBUSTION ENGINE
MECANISME D'ENTRAINEMENT PAR COURROIE POUR UNITES AUXILIAIRES D'UN MOTEUR A COMBUSTION INTERNE

(30) Priorität: 26.11.2002 DE 10255074
(43) Veröffentlichungstag der Anmeldung: 24.08.2005
(73) Patentinhaber: Bayerische Motoren Werke Aktiengesellschaft, 80809 München (DE)
(72) Erfinder: LEMBERGER, Heinz, 85774 Unterföhring (DE); WIMMER, Rudolf, A-4431 Haidershofen (AT); FÖSSL, Peter, A-4441 Behamberg (AT); WIESER, Philipp, A-4521 Schiedlberg (AT)
(86) Internationale Anmeldenummer: PCT/EP2003/011405
(87) Internationale Veröffentlichungsnummer: WO 2004/048759

(56) Entgegenhaltungen:
- DE-A- 3 934 884
- DE-A- 4 039 207
- DE-A- 10 051 977
- PATENT ABSTRACTS OF JAPAN vol. 2000, no. 12, 3. Januar 2001 (2001-01-03) & JP 2000 257553 A (SEIKO SEIKI CO LTD), 19. September 2000 (2000-09-19)

## Beschreibung

Die Erfindung bezieht sich auf einen Riementrieb für Hilfsaggregate einer Brennkraftmaschine, dem ein Reibradgetriebe zugeordnet ist zum Antrieb eines gesondert an der Brennkraftmaschine vorgesehenen Nebenaggregates, dessen Antriebsrad mit einem riemenseitig angetriebenen Reibrad reibschlüssig zusammenwirkt, wobei das Reibrad mittels einer Exzentereinrichtung relativ zum Antriebsrad bezüglich Reibschluss einstellbar angeordnet ist.

Ein derartiger Riementrieb ist Gegenstand der gattungsgemäßen DE- 39 34 884 A1, wobei das Reibrad über eine Spannrolle des Riementriebes angetrieben ist. Das somit nicht direkt vom Riemen angetriebene Reibrad ist mit der Spannrolle auf einem Schwenkhebel angeordnet, wobei zur Entkoppelung der Spannrollen-Einstellung von der Reibrad-Einstellung zum Nebenaggregat-Antriebsrad eine Exzentereinrichtung dient, die unabhängig von der Spannrollen-Einstellung bedarfsweise von Hand einstellbar ist.

Ferner wurde in der nicht vorveröffentlichten Patentanmeldung DE 10236746 A1 ein Riementrieb mit einer Reibradanordnung vorgeschlagen, bei dem ein mit der Außenseite des Riemens im Umschlingungsbereich eines Triebrades der Brennkraftmaschine oder eines Hilfsaggregates reibschlüssig zusammenwirkendes Reibrad mit dem Antriebsrad eines gesonderten Nebenaggregates ebenfalls in reibschlüssiger Antriebsverbindung steht. Angaben zur Aufrechterhaltung einer betriebsgerechten permanenten Eingriffsposition des Reibrades mit dem Antriebsrad einerseits und mit dem Riemen andererseits sind diesem Dokument nicht zu entnehmen.

Der Erfindung liegt die Aufgabe zugrunde, für ein mit einem Riemen direkt reibschlüssig zusammenwirkendes Reibrad zum Antrieb eines gesonderten Nebenaggregates zur Erzielung einer betriebsgerechten, permanenten Eingriffsposition des Reibrades eine baulich einfache Nachstellvorrichtung aufzuzeigen.

Diese Aufgabe ist mit dem Patentanspruch 1 dadurch gelöst, dass das Reibrad femer mit der Außenseite des Riemens im Umschlingungsbereich eines Triebrades der Brennkraftmaschine oder eines Hilfsaggregates reibschlüssig zusammenwirkt und mittels eines auf einem maschinenseitig drehbeweglich angeordneten Exzenter gelagerten Schwenkarmes in permanenter Eingriffsposition mit Antriebsrad und Riemen gehalten ist, wobei der unter der Wirkung einer vorgespannt angeordneten Feder drehangetriebene Exzenter der Nachstellvorrichtung auf den Schwenkarm in Zugrichtung oder Druckrichtung bei entsprechend gerichteter Feder-Vorspannung einwirkt.

Mit der Erfindung ist in vorteilhafter Weise eine baulich einfache Nachstellvorrichtung erzielt, deren weiterer Vorteil eine klein bauende Gestaltung ist.

Ein vorteilhaft großer Nachstellbereich ist dadurch erreicht, wenn der Exzenter mit einer quer zur Zug- oder Druckrichtung des Schwenkarmes gerichteten Exzentrizität als Ausgangslage montiert ist.

Weiter ist eine klein bauende Exzentereinrichtung vorteilhaft dadurch erzielt , dass der Schwenkarm über ein im reibradfemen Endabschnitt ausgebildetes Auge auf dem Exzenter gelagert ist, der in einer zur Exzenterachse koaxialen Ausnehmung mit einer vorgespannt angeordneten Schraubendrehfeder ausgerüstet ist, wobei die einenends maschinenseitig fixierte Schraubendrehfeder andernends auf den Exzenter drehend einwirkend angeordnet ist.

Ferner wird zur Erzielung einer leicht- und klein bauenden Nachstellvorrichtung vorgeschlagen, dass der aus einem Kunststoff gebildete Exzenter auf einer in der Ausnehmung angeordneten, die Schraubendrehfeder aufnehmenden Metallbüchse drehbeweglich gelagert ist, die über einen den Boden der Metallbüchse durchsetzend angeordneten und in eine maschinenseitige Höhlung formschlüssig eingreifenden Endabschnitt der Schraubendrehfeder drehfixiert angeordnet und femer über einen zur Exzenterachse koaxialen Schraubbolzen unter Zwischenlage eines Sicherungsdeckels der Exzentereinrichtung gegen eine maschinenseitige Anschlagfläche kraftschlüssig angeschlagen ist, und der Exzenter zwischen Anschlagfläche und Sicherungsdeckel mit axialem Spiel auf der Metallbüchse angeordnet ist.

Für einen vorteilhaft einfachen Aufbau der Exzentereinrichtung ist erfindungsgemäß vorgesehen, dass die Metallbüchse sicherungsdeckelseitig einen der Nachstellbarkeit des Reibrades entsprechend in Umfangsrichtung angepassten Randausschnitt aufweist zum freien Durchgang eines zur Exzenterachse quer gerichteten Endabschnittes der Schraubendrehfeder zum Drehangriff am Exzenter, und dass die Metallbüchse einen weiteren Randausschnitt aufweist zum Eingriff einer am Sicherungsdeckel angeordneten Drehsicherungsnase.

Weiter sieht die Erfindung für eine kurz und leichtgewichtig bauende Nachstellvorrichtung vor, dass der Exzenter unter Zwischenlage einer Gleitlagerbuchse mit dem Auge des aus einem Kunststoff gebildeten Schwenkarmes in Verbindung steht, der dem Auge relativ eng benachbart mit einer gabelartigen Reibrad-Aufnahme ausgebildet ist, und dass die Exzentereinrichtung des kurzbauenden Schwenkarmes zwischen dem Nebenaggregat-Antriebsrad und dem vom Riemen teilumschlungenen Triebrad auf einem stirnseitig der Brennkraftmaschine vorgesehenen Butzen angeordnet ist. Erreicht ist damit auch eine platzsparende Anordnung der Nachstellvorrichtung.

Schließlich ist ein Vorschlag der Erfindung darauf gerichtet, dass das Reibrad einen aus Kunststoff gebildeten Speichenradkörper umfasst mit einer am Außenumfang angeordneten Auflage aus einem Gummimaterial, wobei der Speichenradkörper gegen einen Lagerbolzen der Schwenkarm-Gabel über ein integriertes, gekapseltes Wälzlager abgestützt ist.

Die Erfindung ist anhand eines bevorzugten, in der Zeichnung dargestellten Ausführungsbeispiels beschrieben. Es zeigt
- Fig.1: eine Brennkraftmaschine mit einem Reibrad mit erfindungsgemäßer Nachstellvorrichtung,
- Fig.2: einen Schnitt gemäß II-II durch die Exzentereinrichtung der Nachstellvorrichtung,
- Fig.3: die Nachstellvorrichtung mit der Exzentereinrichtung in Explosionsdarstellung, und
- Fig,4: die Exzentereinrichtung stimseitig geöffnet zur Veranschaulichung des zur Reibrad-Nachstellung federbelastet verdrehbaren Exzenters.

Ein lediglich abschnittsweise gezeigter Riementrieb 1 für nicht dargestellte Hilfsaggregate einer nur abschnittsweise aufgezeigten Brennkraftmaschine 2 umfasst ein Reibradgetriebe 3 zum Antrieb eines gesondert an der Brennkraftmaschine 2 vorgesehenen Nebenaggregates 4, das vorzugsweise eine Kühlmittelpumpe ist. Diese weist ein Antriebsrad 5 auf, das mit einem riemenseitig angetriebenen Reibrad 6 des Reibradgetriebes 3 zusammenwirkt.

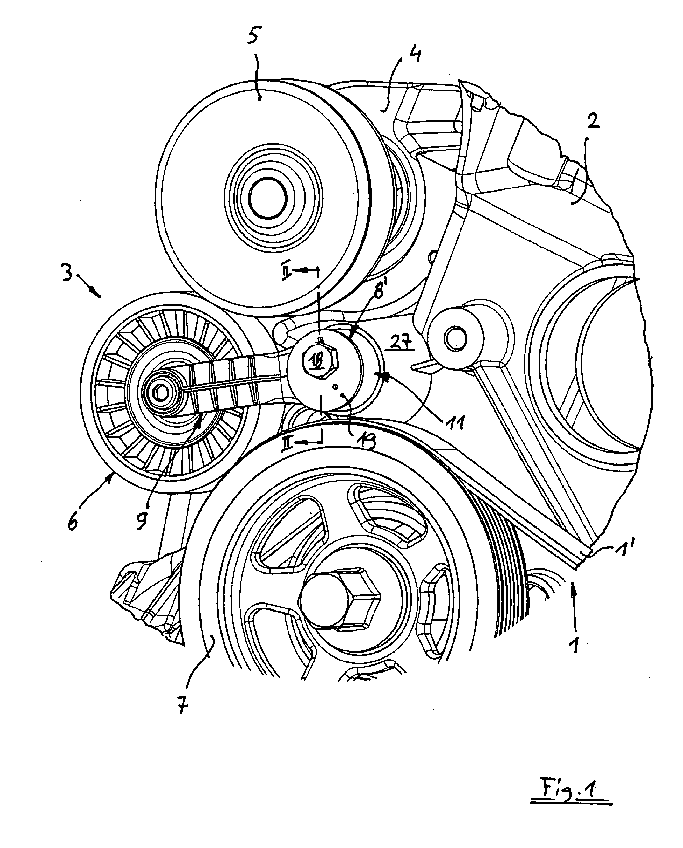

Wie aus Fig.1 ersichtlich, wirkt das Reibrad 6 femer mit der Außenseite des Riemens 1' im Umschlingungsbereich eines Triebrades 7 der Brennkraftmaschine 2 oder eines Hilfsaggregates reibschlüssig zusammen. Weiter ist das Reibrad 6 mittels eines auf einem maschinenseitig drehbeweglich angeordneten Exzenter 8 gelagerten Schwenkarmes 9 in permanenter Eingriffsposition mit Antriebsrad 5 und Riemen 1' gehalten, wobei der unter der Wirkung einer vorgespannt angeordneten Feder 10 drehangetriebene Exzenter 8 der Nachstellvorrichtung 11 auf den Schwenkarm 9 in Zugrichtung oder in Druckrichtung bei entsprechend gerichteter Feder-Vorspannung einwirkt. Vorzugsweise ist bei der in den Figuren 1-4 gezeigten Nachstellvorrichtung 11 das Reibrad 6 mittels des im Gegenuhrzeigersinn drehfederbelasteten Exzenters 8 über den auf Zug belasteten Schwenkarm 9 in permanenter Eingriffsposition gehalten.

Zur Erzielung eines relativ großen Nachstellbereiches ist der Exzenter 8 mit einer quer zur Zugrichtung des Schwenkarmes 9 gerichteten Exzentrizität "e " als Ausgangslage montiert.

Für eine kleinbauende Nachstellvorrichtung 11 ist der Schwenkarm 9 über ein im reibradfemen Endabschnitt ausgebildetes Auge 12 auf dem Exzenter 8 gelagert, der in einer zur Exzenterachse 13 koaxialen Ausnehmung 14 mit einer vorgespannt angeordneten Schraubendrehfeder 10' ausgerüstet ist, wobei die einenends maschinenseitig fixierte Schraubendrehfeder 10' andemends auf den Exzenter 8 drehend einwirkend angeordnet ist.

Eine klein und leicht bauende Exzentervorrichtung 8' ist weiters dadurch erreicht, dass der aus einem Kunststoff gebildete Exzenter 8 auf einer in seiner Ausnehmung 14 angeordneten, die Schraubendrehfeder 10' aufnehmenden Metallbüchse 15 drehbeweglich gelagert ist. Die Metallbüchse 15 ist über einen den Boden 15' durchsetzend angeordneten und in eine maschinenseitige Höhlung 16 formschlüssig eingreifenden Endabschnitt 17 der Schraubendrehfeder 10' drehfixiert angeordnet und femer über einen zur Exzenterachse 13 koaxialen Schraubbolzen 18 unter Zwischenlage eines Sicherungsdeckels 19 gegen eine maschinenseitige Anschlagfläche 20 kraftschlüssig angeschlagen. Weiter ist der Exzenter 8 auf der Metallbüchse 15 zwischen der Anschlagfläche 20 und dem Sicherungsdeckel 19 mit axialem Spiel angeordnet.

Ferner weist die vorgenannte Metallbüchse 15 sicherungsdeckelseitig einen der Nachstellbarkeit des Reibrades 6 entsprechend in Umfangsrichtung angepassten Randausschnitt 21 auf zum freien Durchgang eines zur Exzenterachse 13 quer gerichteten Endabschnittes 22 der Schraubendrehfeder 10' zum Drehangriff am Exzenter 8. Einen weiteren Randausschnitt 23 weist die Metallbüchse 15 zum Eingriff einer am Sicherungsdeckel 19 angeordneten Drehsicherungsnase 24 auf, die ein Mitdrehen des Sicherungsdeckels 19 beim Anziehen des Schraubbolzens 18 der Exzentereinrichtung 8' verhindert.

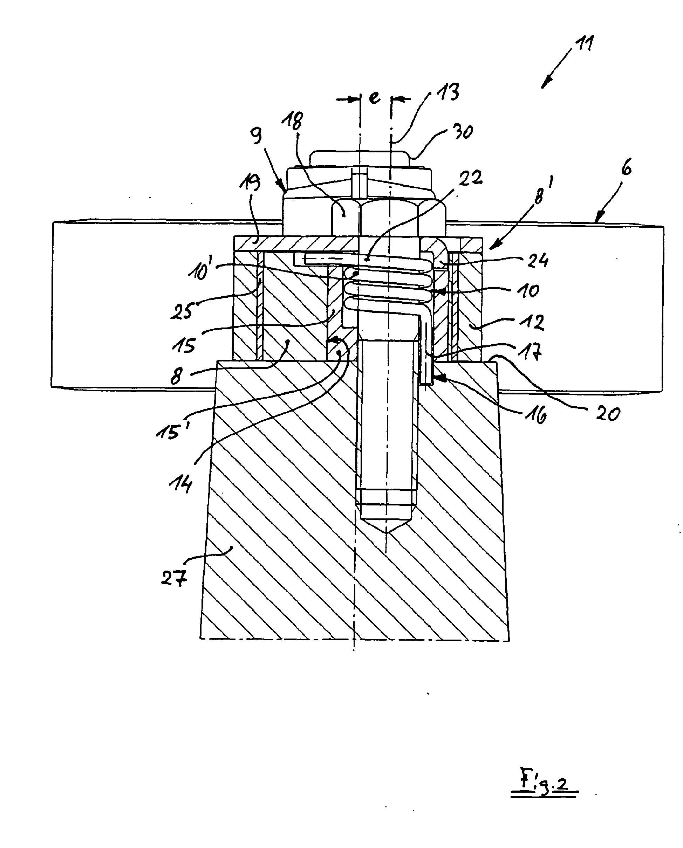

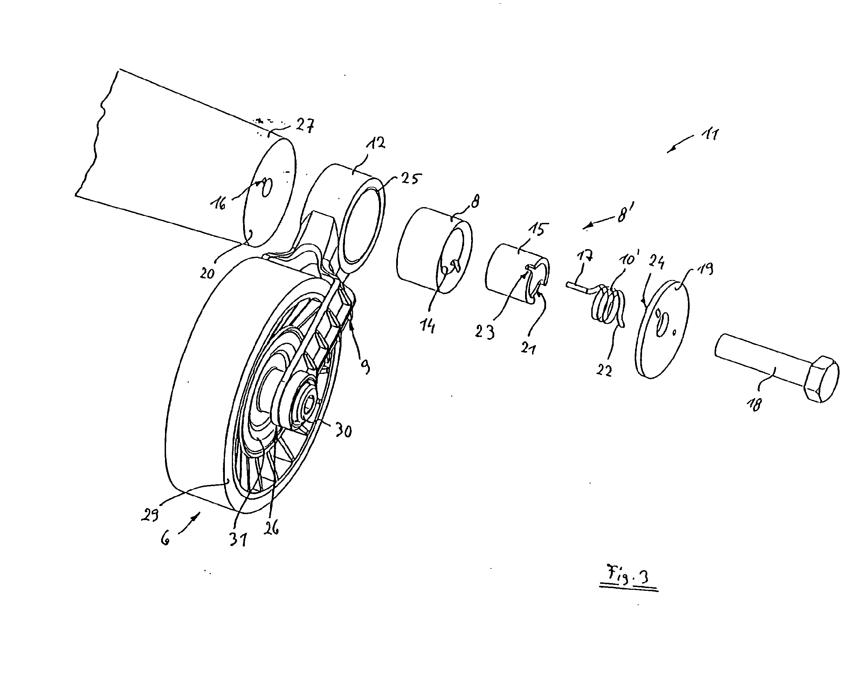

Wie die Figuren 2 und 3 zeigen, steht der Exzenter 8 unter Zwischenlage einer Gleitlagerbuchse 25 mit dem Auge 12 des aus einem Kunststoff gebildeten Schwenkarmes 9 in Verbindung, der dem Auge 12 relativ eng benachbart mit einer gabelartigen Reibrad-Aufnahme 26 ausgebildet ist. Die kleinbauende Exzentereinrichtung 8' erlaubt es, die Nachstellvorrichtung 11 mit dem kurzbauenden Schwenkarm 9 zwischen dem Nebenaggregat-Antriebsrad 5 und dem vom Riemen 1' teilumschlungenen Triebrad 7 auf einem stirnseitig der Brennkraftmaschine 2 vorgesehenen Butzen 27 anzuordnen zur Erzielung einer vorteilhaften Bauraum-Nutzung.

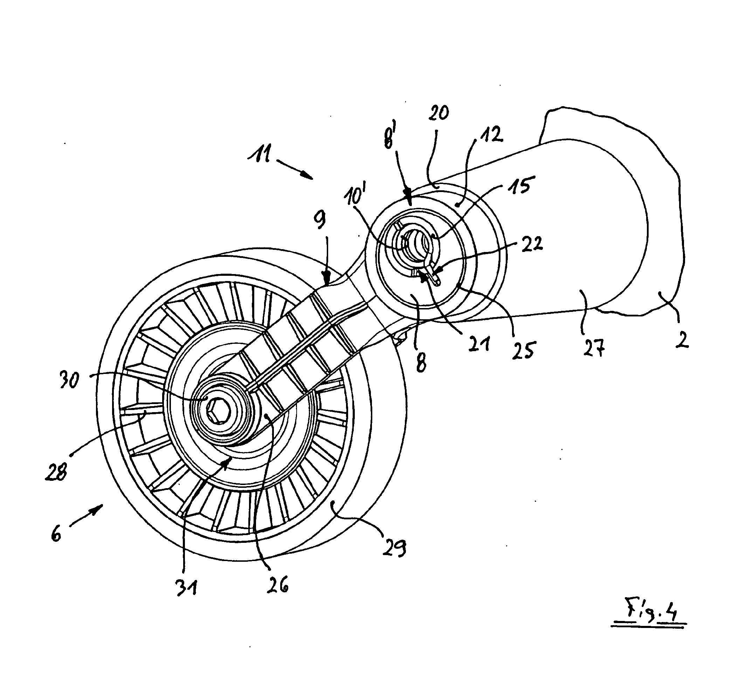

Schüeßlich zeigen insbesondere die Figuren 1 und 4, dass das Reibrad 6 einen aus Kunststoff gebildeten Speichenradkörper 28 umfasst mit einer am Außenumfang angeordneten Auflage 29 aus einem Gummimaterial. Weiter ist der Speichenradkörper 28 gegen einen Lagerbolzen 30 der Schwenkarm-Gabel 26 über ein integriertes und gekapseltes Wälzlager 31 abgestützt.

Mit der Erfindung ist eine wenig Einbauraum erfordernde, leichtgewichtige Nachstellvorrichtung 11 von vorteilhaft einfachem Aufbau erzielt.

## Patentansprüche

1. Riementrieb mit Nachstellvorrichtung für Hilfsaggregate einer Brennkraftmaschine,
- dem ein Reibradgetriebe (3) zugeordnet ist zum Antrieb eines gesondert an der Brennkraftmaschine (2) vorgesehenen Nebenaggregates (4),
- dessen Antriebsrad (5) mit einem riemenseitig angetriebenen Reibrad (6) reibschlüssig zusammenwirkt, wobei
- das Reibrad (6) mittels einer Exzentereinrichtung (8') relativ zum Antriebsrad (5) bezüglich Reibschluss einstellbar angeordnet ist,
**dadurch gekennzeichnet,**
- **dass** das Reibrad (6) femer mit der Außenseite des Riemens (1') im Umschlingungsbereich eines Triebrades (7) der Brennkraftmaschine (2) oder eines Hilfsaggregates reibschlüssig zusammenwirkt und
- mittels eines auf einem maschinenseitig drehbeweglich angeordneten Exzenter (8) gelagerten Schwenkarmes (9) in permanenter Eingriffsposition mit Antriebsrad (5) und Riemen (1') gehalten ist, wobei
- der unter der Wirkung einer vorgespannt angeordneten Feder (10) drehangetriebene Exzenter (8) in Zugrichtung oder Druckrichtung bei entsprechend gerichteter Feder-Vorspannung auf den Schwenkarm (9) einwirkt.

2. Riementrieb mit Nachstellvorrichtung nach Anspruch 1, **dadurch gekennzeichnet,**
- **dass** der Exzenter (8) mit einer quer zur Zug- oder Druckrichtung des Schwenkarmes (9) gerichteten Exzentrizität (e) als Ausgangslage montiert ist.

3. Riementrieb mit Nachstellvorrichtung nach Anspruch 1 und 2, **dadurch gekennzeichnet,**
- **dass** der Schwenkarm (9) über ein im reibradfemen Endabschnitt ausgebildetes Auge (12) auf dem Exzenter (8) gelagert ist, der
- in einer zur Exzenterachse (13) koaxialen Ausnehmung (14) mit einer vorgespannt angeordneten Schraubendrehfeder (10') ausgerüstet ist,
- wobei die einenends maschinenseitig fixierte Schraubendrehfeder (10') andernends auf den Exzenter (8) drehend einwirkend angeordnet ist.

4. Riementrieb mit Nachstellvorrichtung nach Anspruch 1, **dadurch gekennzeichnet,**
- **dass** der aus einem Kunststoff gebildete Exzenter (8) auf einer in der Ausnehmung (14) angeordneten, die Schraubendrehfeder (10') aufnehmenden Metallbüchse (15) drehbeweglich gelagert ist, die
- über einen den Boden (15') der Metallbüchse (15) durchsetzend angeordneten und in eine maschinenseitige Höhlung (16) formschlüssig eingreifenden Endabschnitt (17) der Schraubendrehfeder (10') drehfixiert angeordnet und femer
- über einen zur Exzenterachse (13) koaxialen Schraubbolzen (18) unter Zwischenlage eines Sicherungsdeckels (19) der Exzentereinrichtung (8') gegen eine maschinenseitige Anschlagfläche (20) kraftschlüssig angeschlagen ist, und ferner
- der Exzenter (8) zwischen Anschlagfläche (20) und Sicherungsdeckel (19) mit axialem Spiel auf der Metallbüchse (15) angeordnet ist.

5. Riementrieb mit Nachstellvorrichtung nach Anspruch 3 und 4, **dadurch gekennzeichnet,**
- **dass** die Metallbüchse (15) sicherungsdeckelseitig einen der Nachstellbarkeit des Reibrades (6) entsprechend in Umfangsrichtung angepassten Randausschnitt (21) aufweist zum freien Durchgang eines zur Exzenterachse (13) quergerichteten Endabschnittes (22) der Schraubendrehfeder (10') zum Drehangriff am Exzenter (8), und
- **dass** die Metallbüchse (15) einen weiteren Randausschnitt (23) aufweist zum Eingriff einer am Sicherungsdeckel (19) angeordneten Drehsicherungsnase (24)

6. Riementrieb mit Nachstellvorrichtung nach den Ansprüchen 1-5, **dadurch gekennzeichnet,**
- **dass** der Exzenter (8) unter Zwischenlage einer Gleitlagerbuchse (25) mit dem Auge (12) des aus einem Kunststoff gebildeten Schwenkarmes (9) in Verbindung steht, der
- dem Auge (12) relativ eng benachbart mit einer gabelartigen Reibrad-Aufnahme (26) ausgebildet ist, und
- **dass** die Exzentereinrichtung (8') des kurzbauenden Schwenkarmes (9) zwischen dem Nebenaggregate-Antriebsrad (5) und dem vom Riemen (1') teilumschlungenen Triebrad (7) auf einem stimseitig der Brennkraftmaschine (2) vorgesehenen Butzen (27) angeordnet ist.

7. Riementrieb mit Nachstellvorrichtung nach den Ansprüchen 1-6, **dadurch gekennzeichnet,**
- **dass** das Reibrad (6) einen aus Kunststoff gebildeten Speichenradkörper (28) umfasst mit
- einer am Außenumfang angeordneten Auflage (29) aus einem Gummimaterial, und
- **dass** der Speichenradkörper (28) gegen einen Lagerbolzen (30) der Schwenkarm-Gabel (26) über ein integriertes und gekapseltes Wälzlager (31) abgestützt ist.

## Claims

1. A belt drive with an adjustment device for auxiliary units of an internal combustion engine,
- associated with a friction wheel drive (3) for driving a sub-unit (4) separately provided on the engine (2),
- the driving wheel (5) of the sub-unit frictionally co-operating with a friction wheel (6) driven on the belt, wherein
- the frictional engagement of the friction wheel (6) is adjustable by an eccentric device (8') relative to the driving wheel (5),
**characterised in that**
- the friction wheel (6) also frictionally co-operates with the outside of the belt (1') in the looped region round a driving wheel (7) of the engine (2) or round an auxiliary unit and
- is held by a swivel arm (9), mounted on an eccentric (8) rotatable on the engine, in permanent engagement with the driving wheel (5) and belt (1') wherein
- the eccentric (8), driven in rotation under the action of a prestressed spring (10), acts on the swivel arm (9) in the tension direction or the pressure direction depending on the direction of the spring prestress.

2. A belt drive with an adjustment device according to claim 1, **characterised in that** in the starting position the eccentric (8) is mounted with an eccentricity (e) directed at an angle to the tension or pressure direction of the swivel arm (9).

3. A belt drive with an adjustment device according to claim 1 or 2, **characterised in that**
- the swivel arm (9), via an eyelet (12) formed in the end portion remote from the friction wheel, is mounted on the eccentric (8) which
- is equipped with a prestressed helical torsion spring (10') in a recess (14) coaxial with the eccentric axis (13),
- wherein the helical torsion spring (10') is fixed to the engine at one end and its other end acts on the eccentric (8) so as to rotate it.

4. A belt drive with an adjustment device according to claim 1, **characterised in that**
- the eccentric (8), which is formed of a plastics material, is mounted for rotation on a metal bush (15) disposed in the recess (14) and receiving the helical torsion spring (10'),
- the bush being co-rotatably mounted via an end portion (17) of the helical torsion spring (10') which extends through the base (15') of the bush (15) and positively engages in a hollow (16) in the engine, and
- the bush is non-positively pressed against an abutment surface (20) on the engine by a screw bolt (18) coaxial with the eccentric axis (13) with interposition of a securing cover (19) on the eccentric device (8'), and
- the eccentric (8) is mounted with axial clearance on the metal bush (15) between the abutment surface (20) and the securing cover (19).

5. A belt drive with an adjustment device according to claims 3 and 4, **characterised in that**
- on the securing-cover side the metal bush (15) has a cut-away edge portion (21) adapted to the adjustability of the friction wheel (6) in the peripheral direction in order to provide a free passage for an end portion (22), aligned at an angle to the eccentric axis (13), of the helical torsion spring (10') for rotary engagement on the eccentric (8), and
- the metal bush (15) has another cut-away edge portion (23) for engagement with a rotation-preventing lug (24) disposed on the securing cover (19).

6. A belt drive with an adjustment device according to claims 1 - 5,
**characterised in that**
- the eccentric (8), with interposition of a sliding bearing bush (25), is connected to the eyelet (12) of a plastics material swivel arm (9), which
- is formed with a forked friction-wheel receiver (26) relatively close to the eyelet (12), and
- the eccentric device (8') on the short swivel arm (9) is disposed on a block (27) on the end face of the engine (2) between the driving wheel (5) of the sub-unit and the driving wheel (7) partly surrounded by the belt (1').

7. A belt drive with an adjustment device according to claims 1 - 6, **characterised in that**
- the friction wheel (6) has a plastics material spoked hub (28) with
- a covering (29) of rubber material on its outer periphery and
- the spoked hub (28) is braced by an incorporated encapsulated rolling bearing (31) against a bearing pin (30) of the swivel-arm fork (26).

## Revendications

1. Mécanisme d'entraînement par courroie comportant un dispositif de réglage pour les unités auxiliaires d'un moteur à combustion interne, auquel est associé un engrenage à friction (3) pour entraîner une unité auxiliaire (4) prévue séparément sur le moteur à combustion interne (2), dont la roue motrice (5) entraînée par friction coopère avec une roue de friction (6) entraînée côté courroie, la roue de friction (6) étant agencée de manière à pouvoir être réglée par rapport à la roue motrice (5) relativement a l'entraînement par friction à l'aide d'un dispositif d'excentrique (8'),
**caractérisé en ce que**
la roue de friction (6) entraînée par friction coopère en outre avec le côté extérieur de la courroie (1') dans la zone d'enroulement d'une roue motrice (7) du moteur à combustion interne (2) ou d'une unité auxiliaire, et est maintenu dans la position d'intervention permanente avec la roue motrice (5) et la courroie (1 '),
l'excentrique (8) entraîné en rotation sous l'effet d'un ressort (10) agencé précontraint agissant sur le bras pivotant (9) avec une précontrainte de ressort orientée de façon adéquate dans une direction de traction ou dans une direction de pression.

2. Mécanisme d'entraînement par courroie comportant un dispositif de réglage selon la revendication 1,
**caractérisé en ce que**
l'excentrique (8) est monté avec une excentricité (e) orientée transversalement à la direction de pression ou à la direction de traction du bras pivotant (9) comme position de départ.

3. Mécanisme d'entraînement par courroie comportant un dispositif de réglage selon les revendications 1 et 2,
**caractérisé en ce que**
le bras pivotant (9) est monté sur l'excentrique (8) par un oeil (12) formé dans la section d'extrémité éloignée de la roue de friction, il est équipé d'un ressort enroulé en hélice (10') agencé dans un évidement (14), coaxial à l'axe d'excentrique (13),
le ressort enroulé en hélice fixé du côté de la machine à une extrémité étant agencé de manière à entraîner en rotation l'excentrique (8) à l'autre extrémité.

4. Mécanisme d'entraînement par courroie comportant un dispositif de réglage selon la revendication 1,
**caractérisé en ce que**
l'excentrique (8) en matière plastique est monté de manière à pouvoir tourner sur un manchon de métal (15) agencé dans son évidement (14) et recevant le ressort enroulé en hélice (10'), le manchon de métal (15) étant bloqué en rotation sur la section d'extrémité (17) du ressort enroulé en hélice (10') de manière à rendre stationnaire le fond (15') du manchon de métal (15) et s'engageant par liaison par la forme dans un creux (16) du côté de la machine, et venant en outre en butée par adhérence sur un boulon fileté (18) coaxial à l'axe d'excentrique (13), en intercalant un couvercle de blocage (19) du dispositif d'excentrique (8') contre une face de butée (20) côté la machine,
l'excentrique étant en outre (8) agencé avec un jeu axial sur le manchon de métal (15) entre la face de butée (20) et le couvercle de blocage (19).

5. Mécanisme d'entraînement par courroie comportant un dispositif de réglage selon les revendications 3 et 4,
**caractérisé en ce que**
le manchon de métal (15) présente côté couvercle de blocage une section de bordure (21) adaptée dans la direction périphérique à l'aptitude au réglage de la roue de friction (6) pour le passage libre d'une section d'extrémité (22) du ressort enroulé en hélice (10') orientée transversalement à l'axe d'excentrique (13) pour l'attaque rotative sur l'excentrique (8), et
le manchon de métal (15) présente une autre section de bordure (23) pour l'engagement d'un ergot de blocage en rotation (24) agencé sur le couvercle de blocage (19).

6. Mécanisme d'entraînement par courroie comportant un dispositif de réglage selon l'une quelconque des revendications 1-5,
**caractérisé en ce que**
l'excentrique (8) est en liaison avec l'oeil (12) du bras pivotant (9) en matière plastique en intercalant un manchon de palier lisse (25), relativement près de l'oeil (12) avec un logement de la roue de friction du type fourche (26), et
le dispositif d'excentrique (8') du bras pivotant (9) pouvant être construit instantanément est agencé sur un perçage central (27) côté frontal du moteur à combustion interne (2) entre la roue d'entraînement de l'unité auxiliaire (5) et la roue motrice (7) partiellement enroulée par la courroie (1') .

7. Mécanisme d'entraînement par courroie comportant un dispositif de réglage selon les revendications 1-6,
**caractérisé en ce que**
la roue de friction (6) comprend un corps de roue à rayons (28) en matière plastique, avec un appui en caoutchouc (29) agencé à la périphérie extérieure, et
le corps de roue à rayons (28) est appuyé contre un boulon de palier (30) de la fourche du bras pivotant (26) par un palier à roulement intégré et encapsulé (31).
